**Europäisches Patentamt**

**European Patent Office**

**Office européen des brevets**

(19)

(11) Veröffentlichungsnummer: **0 082 886**
**B2**

(12) **NEUE EUROPÄISCHE PATENTSCHRIFT**

(45) Veröffentlichungstag der neuen Patentschrift:
**25.01.89**

(21) Anmeldenummer: **81110786.1**

(22) Anmeldetag: **25.12.81**

(51) Int. Cl.⁴: **C 04 B 2/12,** F 27 B 1/02,
**C 04 B 2/10**

(54) **Verfahren zum Brennen von Kalkstein, Dolomit oder ähnlichem Material sowie Ringschachtofen zu dessen Durchführung.**

(43) Veröffentlichungstag der Anmeldung:
**06.07.83 Patentblatt 83/27**

(45) Bekanntmachung des Hinweises auf die Patenterteilung:
**03.07.85 Patentblatt 85/27**

(45) Bekanntmachung des Hinweises auf die Entscheidung
über den Einspruch:
**25.01.89 Patentblatt 89/4**

(84) Benannte Vertragsstaaten:
**AT BE CH DE FR GB IT LI NL SE**

(56) Entgegenhaltungen:
**DE-A-2 710 205**
**DE-A-2 830 125**
**DE-A-2 845 525**
**DE-A-2 927 862**
**DE-B-1 281 111**
**DE-B-1 961 789**
**DE-B-1 961 789**
**DE-B-2 117 755**

(73) Patentinhaber: **Beckenbach, Ulrich, Dipl.- Ing.,
Fontanestrasse 13, D-4005 Meerbusch 1 (DE)**

(72) Erfinder: **Der Erfinder hat auf seine Nennung
verzichtet**

(74) Vertreter: **Goddar, Heinz J., Dr., FORRESTER &
BOEHMERT Widenmayerstrasse 4/I, D-8000
München 22 (DE)**

EP 0 082 886 B2

## Beschreibung

Die Erfindung betrifft einen Ringschachtofen zum Brennen und Sintern von stückigem Gut, wie Kalkstein, Dolomit oder dergleichen, mit den Merkmalen des ersten Teil des Anspruchs 1, wie er aus der DE-C-1 281 111 vorbekannt ist.

Bei dem vorbekannten Ofen wird im unteren Teil des unteren Brennzonenbereiches mit Umwälzung von Gasen gearbeitet und der Brennstoff wird von den den oberen Bereich der Brennzone aufwärts durchströmenden Brenngasen getrennt und so geregelt zugeführt, daß im oberen Brennzonenbereich zur intensiven Entsäuerung des Gutes bei geringem Luftüberschuss und hoher Temperatur und im unteren Brennzonenbereich zur restlichen Entsäuerung bei großem Luftüberschuß mit niedriger Temperatur gefahren wird.

Ein vergleichbarer Ringschachtofen ist aus der DE-A-2 830 125 bekannt. Weiter wird in der infolge Artikel 114 (2) zu berücksichtigenden DE-A-2 927 862 ein Ringschachtofen offenbart, bei dem der für das Brennen benötigte Brennstoff gleichmäßig über den Querschnitt des Brennofens verteilt zugeführt wird.

Bei Öfen der eingangs genannten Art ist die Art und Weise der Eingabe des Brennstoffes von größter Wichtigkeit. Beispielsweise kann feinkörniger und/oder stückiger fester Brennstoff direkt in das Lückenvolumen der Schüttung des zu brennenden Gutes an z. B. mehreren Stellen der Ofenwandung eingegeben werden. Das Lückenvolumen wird durch die in der Schüttung aus stückigem Gut entstehenden Hohlräume gebildet. Diese Hohlräume haben je nach Art des Gutes sehr unterschiedliche Größen und Formen. Darüber hinaus ist zu beachten, daß das Gut durch den Ofen bewegt wird, so daß sich die Ausströmverhältnisse am Austritt der Zuführorgane während des Betriebes laufend verändern. Da bei einer derartigen Eingabe des Brennstoffes in das Lückenvolumen der Schüttung die Größe der Hohlräume in der Schüttung den Ausströmquerschnitten des Brennstoffes vergleichbar sind, ergeben sich keine stabilen und kontrollierten Einströmbedingungen für den Brennstoff.

Demgegenüber liegt der vorliegenden Erfindung die Aufgabe zugrunde, die gattungsgemäße Vorrichtung derart weiterzubilden, daß eine durchgehende und kontrollierbare gleichmäßige Beaufschlagung des Schüttguts mit festem Brennstoff möglich ist.

Erfindungsgemäß wird diese Aufgabe durch eine Ausbildung des eingangs genannten Ringschachtofens mit den im zweiten Teil des Anspruchs 1 angegebenen Merkmale gelöst.

Die Unteransprüche geben vorteilhafte Ausgestaltungen dieses Ringschachtofens an.

Die Erfindung wird im folgenden anhand einer Zeichnung erläutert. Dabei zeigt:

Fig. 1    einen erfindungsgemäßen Ringschachtofen im Längsschnitt entlang der Ofenlängsachse;

Fig. 2    einen Längsschnitt durch den Schachtofen in Höhe der Brennkammern;

Fig. 3    einen Schnitt entlang der Linie I - I von Fig. 2;

Fig. 4    einen Schnitt entlang der Linie von Fig. 2;

Fig. 5    ein erfindungsgemässes Zuführorgan, das den Brennstoff direkt auf die Schüttgutoberfläche aufbringt;

Fig. 6    ein anderes Ausführungsbeispiel eines erfindungsgemässen Zuführorganes, bei dem zwischen Zuführorgan und Schüttgutoberfläche eine Rückprall-Platte angeordnet ist;

Fig. 7    ein weiteres Ausführungsbeispiel für die Anordnung des Zuführorganes;

Fig. 8    ein Zuführorgan, das als Langgestrecktes, die Brennkammer durchragendes Rohr ausgestaltetist;

Fig. 9    Einzelheiten des als Rohr ausgestalteten Zuführorganes, und

Fig. 10   das in Fig. 9 gezeigte Zuführorgan, wobei die Hülse zum Schliessen der Öffnungen nach rechts verschoben ist.

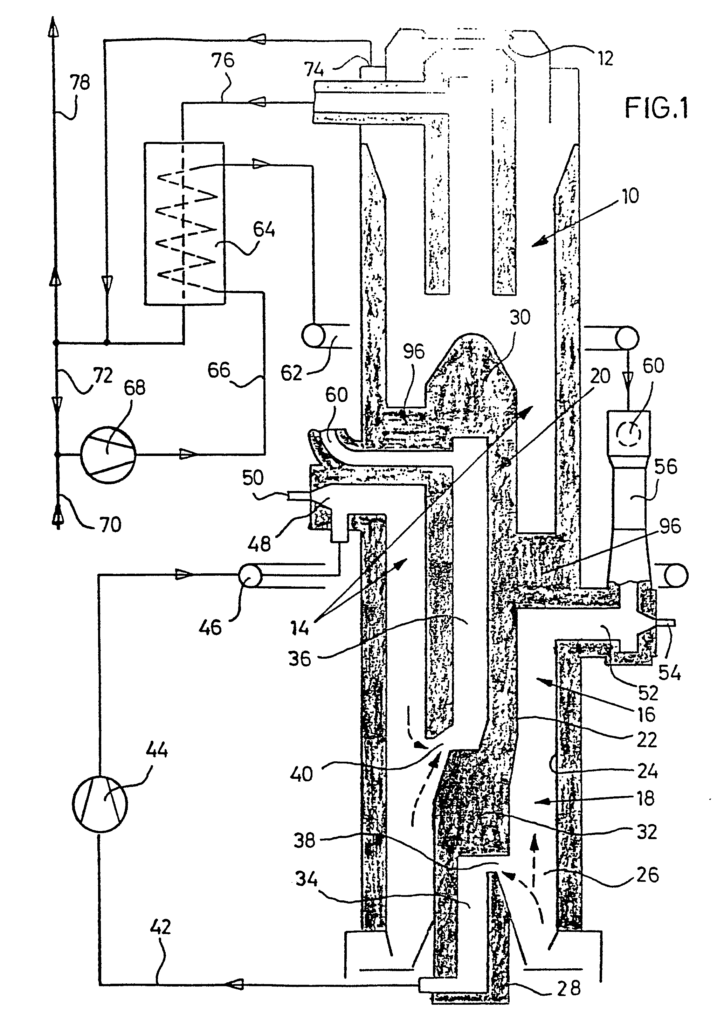

Wie Fig. 1 zeigt, weist der Ringschachtofen von oben nach unten eine Vorwärmezone 10, in die das zu brennende Gut über eine Aufgabeeinrichtung 12 eingebbar ist, eine aus einem oberen Brennzonenbereich 14 und einem unteren Brennzonenbereich 16 bestehende Brennzone sowie eine Kühlzone 18 auf. Ein Schachteinsatz 20 ist innerhalb des Ringschachtofens in der prinzipiell aus der DE-PS Nr. 1 281 111 bekannten Weise abgestützt. Zwischen der Umfangswand 22 des Schachteinsatzes 20 und der Innenwandung 24 des äusseren Ofenmantels ist ein Ringschacht 26 gebildet, in welchem das zu brennende Gut den Ofen von oben nach unten durchwandert. Der Schachteinsatz 20 ist an seinem unteren Ende durch eine Bodenwand 28 und oben durch eine z. B. konisch ausgebildete Abdeckung 30 verschlossen. Weiterhin ist der Schachteinsatz 20 durch eine Querwand 32 in einen unteren Abschnitt 34 und einen oberen Abschnitt 36 unterteilt. Der Ringschacht 26 steht mit dem unteren Abschnitt 34 des Schachteinsatzes 20 über Kühlluftöffnungen 38 in Verbindung, während eine Verbindung zwischen dem Ringschacht 26 und dem oberen Abschnitt 36 des Schachteinsatzes 20 an einer höher gelegenen Stelle durch Umwälzgasöffnungen 40 gebildet ist.

Aus dem unteren Abschnitt 34 des Schachteinsatzes 20 führt eine Kühlluftleitung 42 über ein Gebläse 44 zu einer Ringleitung 46, aus der die oberen Brennkammern 48 einer oberen Brennkammerebene mit Luft beaufschlagbar sind, wobei Brennkammern 48 Brennstoff über Verbrennungseinrichtungen 50 zugeführt wird. Unteren Brennkammern 52 wird Brennstoff über Verbrennungseinrichtungen 54 zugeführt. Injektoren 56 sorgen für die Umwälzung der in die Umwälzgasöffnungen 40 eintretenden Gase. Aus dem oberen Abschnitt 36 des Schachteinsatzes 20 herausführende Austrittskanäle 60 münden in die Injektoren 56 ein. Einen Rekuperator 64 durchsetzt eine in eine Ringleitung 62 mündende Leitung 66, die aus einem Kompressor 68 beaufschlagbar ist, der mit einer Frischluftzuführung 70 und einer Abgaszuführleitung 72 in Verbindung steht. Weiterhin lässt die Zeichnung eine am oberen Ende der Vorwärmzone 10 aus dem Ringschachtofen herausführende Ofenabgasleitung 74 erkennen, die zusammen mit einer Rekuperatorleitung 76 in die Abgaszuführleitung 72 einmündet. Eine Abgasleitung 78 dient zum Abführen der im Prozess nicht verbrauchten Abgase.

Brücken 96 erstrecken sich zwischen Schachteinsatz 20 und Innenwand 24.

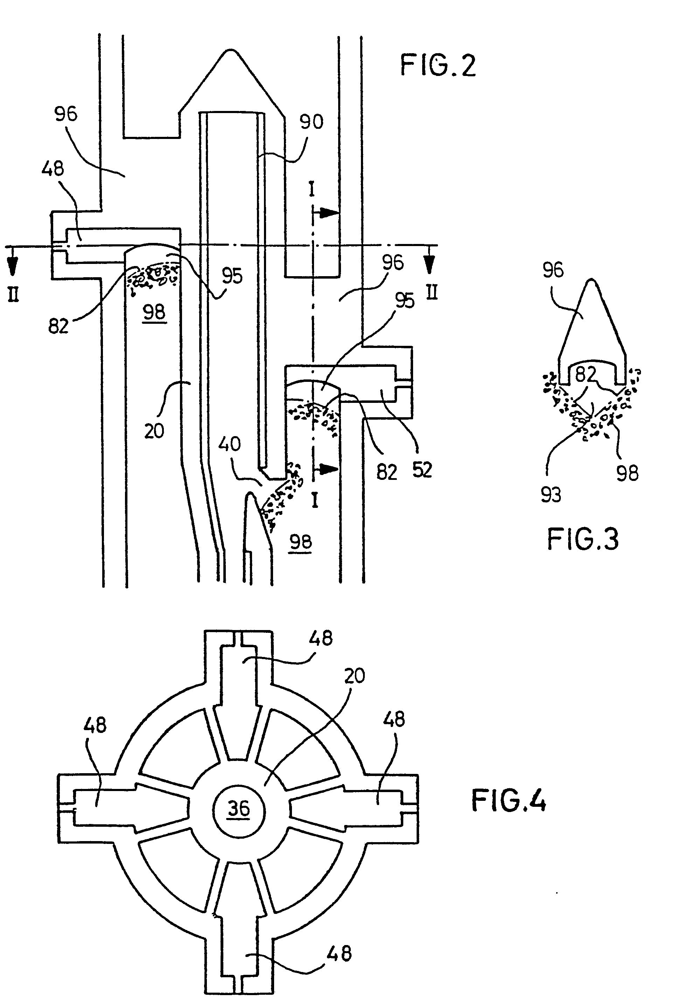

Gemäss Fig. 2 und Fig. 3 böscht sich das Schüttgut 98 derart ab, dass sich unter den Brücken 96 Hohlräume 95 bilden. Die Schüttgutoberfläche 82 ist dabei zwischen Schachteinsatz 20 und Ofenwandung 24 abschüssig geneigt. Unterhalb der Brücken 96 ergeben sich gemäss Fig. 3 Vertiefungen 93 in der Schüttgutoberfläche 82.

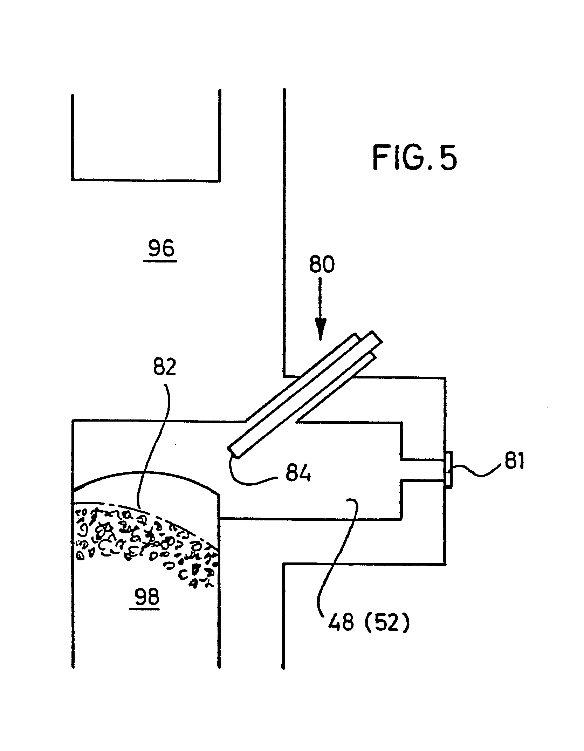

Gemäss Fig. 5 ist das in seiner Längsrichtung verschiebbare Zuführorgan 80 derart in der Brennkammer 48 bzw. 52 angeordnet, dass die Mündung 84 des Zuführorganes 80 direkt der Schüttgutoberfläche 82 gegenüberliegt. Der mittels des Zuführorganes 80 eingebrachte Brennstoff wird also in diesem Ausführungsbeispiel fast senkrecht auf die Schüttgutoberfläche auftreffen.

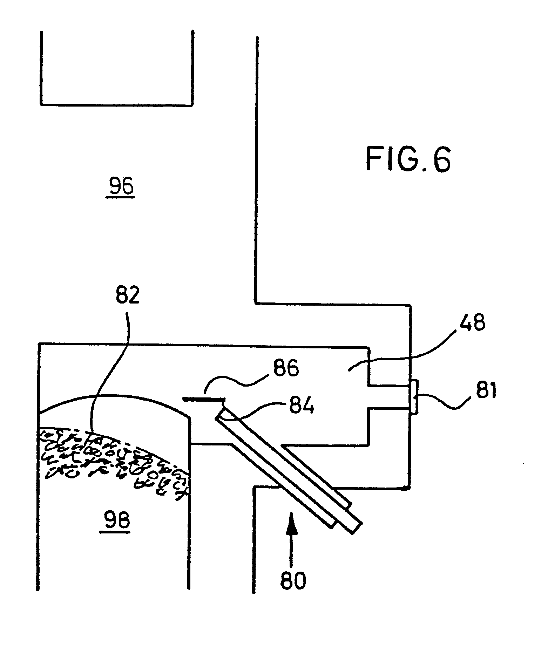

Im in Fig. 6 gezeigten Ausführungsbeispiel ist an der Mündung 84 des in seiner Längsrichtung verschiebbaren und/oder um seine Längsrichtung verdrehbaren Zuführorganes 80 eine Platte 86 angebracht, so dass die aus der Mündung 84 austretenden Brennstoffe an der Platte 86 abprallen und sodann auf die Schüttgutoberfläche 82 auftreffen.

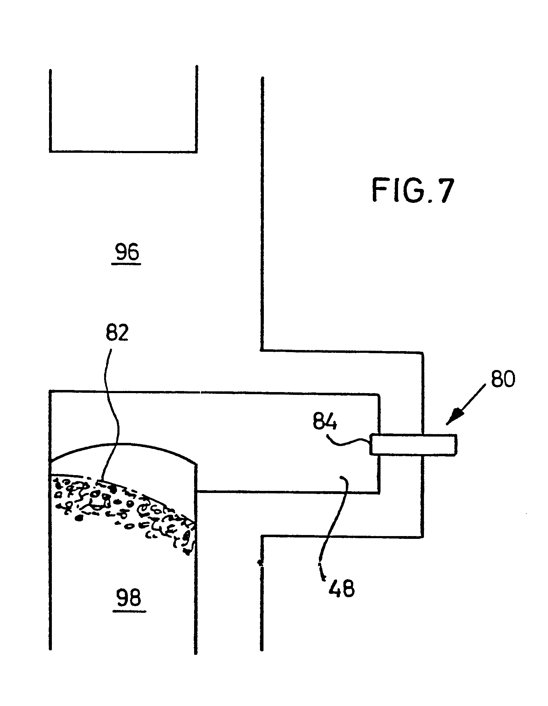

Fig. 7 zeigt eine weitere Variante, bei der das Zuführorgan 80 im von der Schüttgutoberfläche 82 entfernten Abschnitt der Brennkammer 48 (bzw. 52) angeordnet ist, so dass der aus der Mündung 84 austretende Brennstoff vor Auftreffen auf die Schüttgutoberfläche 82 einen relativ weiten Weg zurückzulegen hat und deshalb vor Auftreffen auf die Schüttgutoberfläche 82 ohne Schwierigkeiten vorverbrennbar ist.

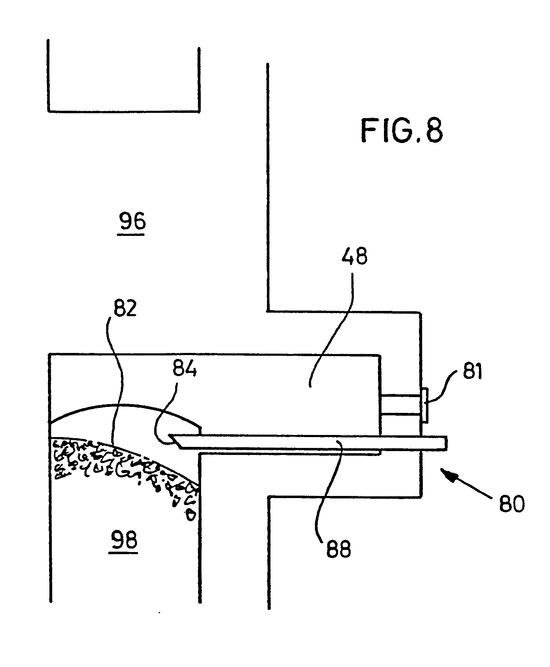

Bei dem in Fig. 8 gezeigten, in seiner Längsrichtung verschiebbaren Zuführorgan 80 ist ein langgestrecktes Rohr 38 am Boden der zylinderförmigen Brennkammer 48 (bzw. 52) angeordnet, dessen Mündung 84 in den Ofen hineinragt und unmittelbar der Schüttgutoberfläche 82 gegenüberliegt.

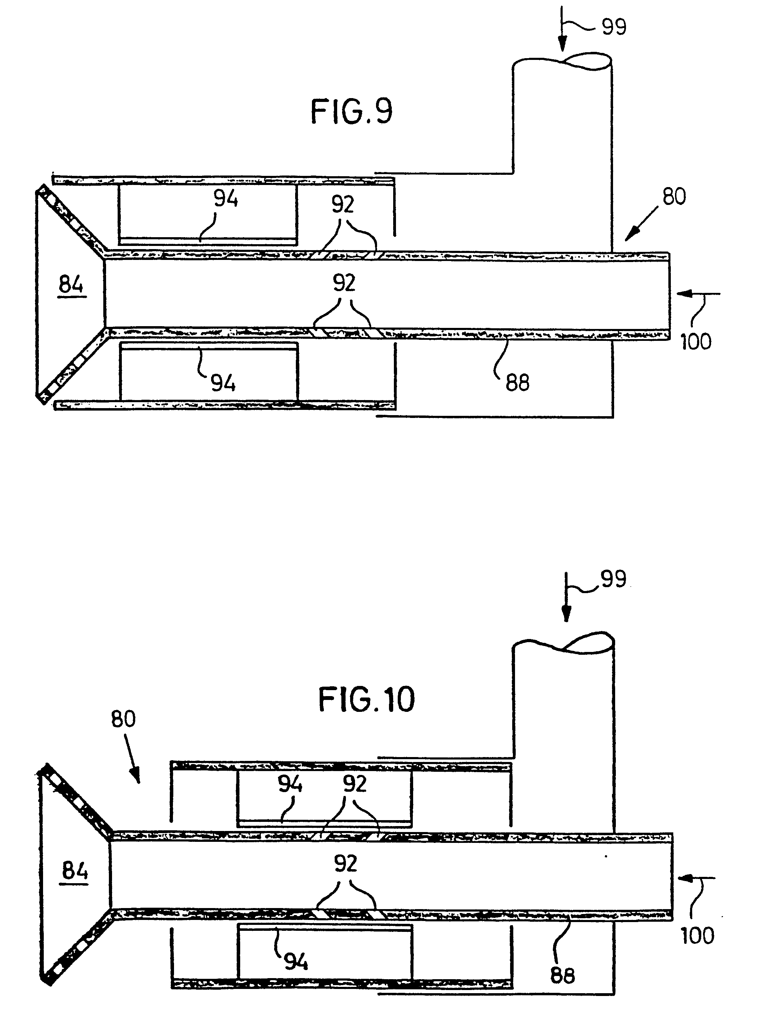

Die Fig. 9 und 10 zeigen Einzelheiten eines Zuführorganes 80, bei dem aus Richtung des Pfeiles 99 einströmende, vorerwärmte Luft mit aus Richtung des Pfeiles 100 einströmendem Brennstoff gemischt wird. Der Pfeil 99 symbolisiert dabei die Ringleitungen 46 bzw. 62 aus Fig. 1. Das Zuführorgan 80 ist als langgestrecktes Rohr 88 ausgebildet, dessen Mündung 84 trichterförmig ausgestaltet ist und das in seiner Mantelfläche Öffnungen 92 aufweist, die mit den Zuleitungen 99 für die vorerwärmte Luft leitend verbunden sind. Eine Hülse 94 umschliesst das Rohr 88 teilweise und ist koaxial mit dem Rohr 88 verschiebbar, so dass die Öffnungen 92 wahlweise mehr oder weniger abdeckbar sind. Auf diese Weise lässt sich ersichtlich das Mischungsverhältnis zwischen vorerwärmter Luft und Brennstoff wunschgemäss einstellen. In Fig. 10 ist die Hülse 94 völlig über die Öffnungen 92 geschoben, so dass keine vorerwärmte Luft dem Brennstoff zugesetzt wird.

Die anhand des Zuführorganes 80 in Fig. 9 und 10 erwähnte Zuführung von vorerwärmter Luft über die Einlässe 92 in das Zuführorgan kann so oder in ähnlicher Form auch für alle beschriebenen Zuführorgane anwendbar sein.

Die in der vorstehenden Beschreibung, der Zeichnung und in den Ansprüchen offenbarten Merkmale der Erfindung können sowohl einzeln, als auch in beliebiger Kombination für die Verwirklichung der Erfindung in ihren verschiedenen Ausführungsformen wesentlich sein.

**Bezugszeichenliste**
(List of Reference Numerals)

| | | |
|---|---|---|
| 1 | | 1 |
| 2 | | 2 |
| 3 | | 3 |
| 4 | | 4 |
| 5 | | 5 |
| 6 | | 6 |
| 7 | | 7 |
| 8 | | 8 |
| 9 | | 9 |
| 10 | Vorwärmezone | 10 |
| 11 | | 11 |
| 12 | Aufgabeeinrichtung | 12 |
| 13 | | 13 |
| 14 | oberer Brennzonenbereich | 14 |
| 15 | | 15 |
| 16 | unterer Brennzonenbereich | 16 |
| 17 | | 17 |
| 18 | Kühlzone | 18 |
| 19 | | 19 |
| 20 | Schachteinsatz | 20 |
| 21 | | 21 |
| 22 | Umfangswand | 22 |
| 23 | | 23 |
| 24 | Innenwandung | 24 |
| 25 | | 25 |
| 26 | Ringschacht | 26 |
| 27 | | 27 |
| 28 | Bodenwand | 28 |
| 29 | | 29 |
| 30 | Abdeckung | 30 |
| 31 | | 31 |
| 32 | Querwand | 32 |

33
34 unterer Abschnitt des Schachteinsatzes 34
35
36 oberer Abschnitt des Schachteinsatzes 36
37
38 Kühlluftöffnung
39
40 Umwälzgasöffnung
41
42 Kühlluftleitung
43
44 Gebläse
45
46 Ringleitung
47
48 obere Brennkammer
49
50 Verbrennungseinrichtung
51
52 untere Brennkammer
53
54 Verbrennungseinrichtung
55
56 Injektor
57
58
59
60 Austrittskanal
61
62 Ringleitung
63
64 Rekuperator
65
66 Leitung
67
68 Kompressor
69
70 Frischluftzuführung
71
72 Abgaszuführleitung
73
74 Ofenabgasleitung
75
76 Rekuperatorleitung
77
78 Abgasleitung
79
80 Zuführorgan; 80' Mantel (von 80)
81 Sichtfenster
82 Schüttgutoberfläche
83
84 Mündung (von 80)
85
86 Platte
87
88 Rohr
89
90 Doppelmantel-Ringschacht
91
92 Öffnung
93 Vertiefung
94 Hülse
95 Hohlraum
96 Brücke
97

98 Schüttgut
99 Pfeil
100 Pfeil

**Patentansprüche**

1. Ringschachtofen zum Brennen und Sintern von stückigem Gut, wie Kalkstein, Dolomit oder dergleichen, mit einer Vorwärmzone, einer Brennzone, in deren oberem Bereich einerseits und in deren unteren Bereich andererseits in zwei verschiedenen Ebenen jeweils in der Ofenwandung angeordnete, mit Brennstoff und Brennluft beaufschlagbare Brenner aufweisende Brennkammern vorgesehen sind, einer an die Brennzone anschließenden Kühlzone mit unterer Kühlluftzuführung und einem oben geschlossenen, durch eine Querwandung in einen oberen und einen unteren Abschnitt unterteilten, zwischen seiner äußeren Umfangswandung und der Ofeninnenwandung einen Ringschacht bildenden Schachteinsatz, dessen unteres Ende in der Kühlzone und dessen oberes Ende oberhalb der oberen Brennerebene liegt, wobei am oberen Ende der Kühlzone Kühlluft zusammen mit den den unteren Bereich der Brennzone im Gleichstrom abwärts durchströmenden Brenngasen über Umwälzgasöffnungen in den Einsatz innenraum eintritt und aus diesem unter Zumischung von Brennstoff und Luft den Brennkammern der unteren Brennerebene zuführbar ist, und wobei sich zwischen Schachteinsatz und Innenwandung des Ofenmantels feuerfeste Brücken erstrecken, unterhalb derer sich Hohlräume des Schüttgutes ausbilden, dadurch gekennzeichnet, daß jeweils ein Zuführorgan (80) für stück- und/oder feinkörnigen bzw. staubförmigen Brennstoff an (bzw. in) den Brennkammern (52, 48) im wesentlichen auf die Schüttgutoberfläche der Hohlräume (82) gerichtet angeordnet ist, im Strömungsweg des stück- und/oder feinkörnigen bzw. staubförmigen Brennstoffes zwischen den Zuführorganen (80) und der Schüttgutoberfläche (82) jeweils eine Rückprall-Platte (86) vorgesehen ist, deren Orientierung einstellbar ist, und Sicht-Fenster (81) in der Front-Seite des Brennkammer-Zylinders (48, 52) und/oder unterhalb der Brücken (96) und oberhalb der Schüttungsoberflächen (82) vorgesehen sind.

2. Ringschachtofen nach Anspruch 1, dadurch gekennzeichnet, daß die Rückprallplatten (86) an der Mündung (84) der Zuführorgane (80) befestigt sind.

3. Ringschachtofen nach Anspruch 1 oder 2, dadurch gekennzeichnet, daß die Zuführorgane (80) im von der Schüttgutoberfläche (82) entfernten Abschnitt der Brennkammer (52, 48) angeordnet sind.

4. Ringschachtofen nach einem der vorangehenden Ansprüche, dadurch gekennzeichnet, daß die Zuführorgane (80) ein die Brennkammer (52, 48) durchragendes Rohr (88) aufweisen.

5. Ringschachtofen nach einem der vorangehenden Ansprüche, dadurch gekennzeichnet, daß die Zuführorgane (80) rohrförmig sind und in ihrem Mantel (80') Öffnungen (92) aufweisen, die durch vorerwärmte Luft beaufschlagt und wahlweise verschließbar sind.

6. Ringschachtofen nach Anspruch 5, dadurch gekennzeichnet, daß die rohrförmigen Zuführorgane (80) jeweils von einer axial verschiebbaren Hülse (94) teilweise umschlossen sind.

7. Ringschachtofen nach einem der vorangehenden Ansprüche, dadurch gekennzeichnet, daß die Brennkammern (48, 52) zylindrisch sind.

8. Ringschachtofen nach Anspruch 7, dadurch gekennzeichnet, daß die Zuführorgane (80) am Boden der Brennkammern verlaufen.

## Claims

1. An annular shaft furnace for calcining and sintering material in piece form, such as limestone, dolomite or the like, comprising a preheat zone, a calcining zone, in whose top region, on the one hand, and in whose bottom region, on the other hand, combustion chambers are provided in two different planes, each combustion chamber being disposed in the furnace wall and having burners adapted to be fed with fuel and air for combustion, a cooling zone adjoining the calcining zone and having a bottom cooling air supply and a shaft insert which is closed at the top, is subdivided into a top and bottom section by a transverse partition, and forms an annular shaft between its outer peripheral wall and the furnace inner wall, the bottom end of the shaft insert being situated in the cooling zone and the top end thereof being situated above the top burner plane, while at the top end of the cooling zone cooling air together with the combustion gases flowing down through the bottom region of the calcining zone in concurrent enters the insert interior via circulating gas apertures and can be fed from the insert interior to the combution chambers of the bottom burner plane with the addition of fuel and air, refractory bridges extending between the shaft insert and the inner wall of the furnace envelope, cavities in the bulk material forming beneath said bridges, characterised in that each feed member (80) for fuel in piece form and/or fine-grain form or dust form is disposed on (or in) the combustion chambers (52, 48) so as to be directed substantially towards the surface of the bulk material of the cavities (82), a baffle plate (86) is provided in each case in the flow path of the fuel in piece form and/or fine-grain form or dust form between the supply means (80) and the bulk material surface (82), the orientation of said baffle plate being adjustable, and inspection windows (81) are provided in the front of the combustion chamber cylinder (48, 52) and/or beneath the bridges (96) and above the bulk material surfaces (82).

2. An annular shaft furnace according to claim 1, characterised in that the baffle plates (86) are fixed on the opening (84) of the feed means (80).

3. An annular shaft furnace according to claim 1 or 2, characterised in that the feed means (80) are disposed in that part of the combustion chamber (52, 48) which is remote from the bulk material surface (82).

4. An annular shaft furnace according to any one of the preceding claims, characterised in that the feed means (80) comprise a tube (88) extending through the combustion chamber (52, 48).

5. An annular shaft furnace according to any one of the preceding claims, characterised in that the feed means (80) are tubular and their envelope (80') has openings (92) to which preheated air is fed and which are optionally closable.

6. An annular shaft furnace according to claim 5, characterised in that the tubular feed means (80) are each partially enclosed by an axially slidable sleeve (94).

7. An annular shaft furnace according to any one of the preceding claims, characterised in that the combustion chambers (48, 52) are cylindrical.

8. An annular shaft furnace according to claim 7, characterised in that the feed means (80) extend at the base of the combustion chambers.

## Revendications

1. Four à cuve annulaire pour cuire et fritter de la matière en morceaux, telle que calcaire, dolomie et similaire, comportant une zone de préchauffage, une zone de cuisson, dans la partie supérieure de laquelle, d'une part, et dans la partie inférieure, d'autre part, sont prévues des chambres de combustion munies de brûleurs alimentés en combustible et air de combustion et montés respectivement dans la paroi du four dans deux plans différents, une zone de refroidissement adjacente à la zone de cuisson comprenant une amenée, ou alimentation, inférieure d'air de refroidissement et une garniture de cuve fermée à la partie supérieure, formant puits annulaire entre sa paroi périphérique extérieure et la paroi intérieure du four, et subdivisée, par une paroi transversale, en une section supérieure et une section inférieure, garniture de cuve dont l'extrémité inférieure se trouve dans la zone de refroidissement et l'extrémité supérieure au-dessus du plan de brûleur supérieur, de l'air de refroidissement, avec les gaz de combustion, qui traversent vers le bas, à contre-courant, la partie inférieure de la zone de combustion, pénétrant, à l'extrémité supérieure de la zone de refroidissement, dans l'espace intérieur de la garniture, par des orifices de gaz de circulation, et pouvant, après en être sorti et mélangé avec du combustible et de l'air, être amené aux chambres de combustion du plan de brûleur inférieur, et des ponts réfractaires s'étendant entre garniture de cuve et paroi intérieure de l'enveloppe du four sous lesquels se forment des vides dans la matière déversée, caractérisé par le fait qu'un organe d'alimentation (80) du combustible en morceaux et/ou en grains fins ou poudre est disposé sur (ou dans) la chambre de combustion respective (52, 48), dirigé sensiblement vers la surface de la matière déversée (82), sur la trajectoire d'écoulement du combustible en morceaux et/ou en grains fins ou poudre, est prévue, entre organe d'alimentation (80) et surface de matière déversée (82), respectivement, une plaque de rebondissement (86) dont l'orientation est réglable à volonté, et des fenêtres de visée (81) sont prévues dans la face frontale de la chambre de combustion-cylindre (48, 52) et/ou sous les ponts (96) et au-dessus de la surface de la matière déversée (82).

2. Four à cuve annulaire selon la revendication 1, caractérisé par le fait que les plaques de rebondissement (86) sont fixées à l'embouchure (84) de l'organe d'alimentation (80).

3. Four à cuve annulaire selon la revendication 1 ou 2, caractérisé par le fait que l'organe d'alimentation (80) est disposé dans la section de la chambre de combustion (52, 48) éloignée de la surface de la matière déversée (82).

4. Four à cuve annulaire selon l'une des revendications précédentes, caractérisé par le fait que l'organe d'alimentation (80) comporte un tube (88) faisant saillie à travers la chambre de combustion (52, 48).

5. Four à cuve annulaire selon l'une des revendications précédentes, caractérisé par le fait que les organes d'alimentation (80) sont tubulaires et présentent dans leur enveloppe (80') des ouvertures (92) qui sont frappées par l'air préchauffé et sont obturables à volonté.

6. Four à cuve annulaire selon la revendication 5, caractérisé par le fait que les organes d'alimentation (80) tubulaires sont, respectivement, entourés partiellement par un manchon (94) coulissant axialement.

7. Four à cuve annulaire selon l'une des revendications précédentes, caractérisé par le fait que les chambres de combustion (48, 52) sont cylindriques.

8. Four à cuve annulaire selon la revendication 7, caractérisé par le fait que l'organe d'alimentation (80) s'étend au fond du cylindre-chambre de combustion.

FIG.1

FIG.2

FIG.3

FIG.4

FIG. 5

FIG.6

96

82

48

86

81

84

98

80

FIG.7

96

82

80

84

48

98

FIG.8

## FIG.9

## FIG.10